# EUROPEAN PATENT SPECIFICATION

(11) **EP 2 547 104 B1**
(45) Date of publication and mention of the grant of the patent: **10.06.2015**
(21) Application number: 11753110.3
(22) Date of filing: 03.02.2011
(51) Int. Cl.: H04N 7/18, B60R 1/00, B60R 21/00

(54) **IMAGE CONTROL APPARATUS**
BILDSTEUERUNGSVORRICHTUNG
APPAREIL DE COMMANDE D'IMAGE

(30) Priority: 12.03.2010 JP 2010056355
(43) Date of publication of application: 16.01.2013
(73) Proprietor: Aisin Seiki Kabushiki Kaisha, Aichi 448-8650 (JP)
(72) Inventor: MIYOSHI Hidehiko, Kariya-shi Aichi 448-8650 (JP); NAGAMINE Noboru, Kariya-shi Aichi 448-8650 (JP); MIURA Kenji, Kariya-shi Aichi 448-8650 (JP); YAMAMOTO Kinji, Kariya-shi Aichi 448-8650 (JP); GOTO Kenjiro, Kariya-shi Aichi 448-8650 (JP)
(74) Representative: TBK
(86) International application number: PCT/JP2011/052259
(87) International publication number: WO 2011/111448

(56) References cited:
- EP-A1- 0 700 212
- JP-A- 63 048 985
- JP-A- 2001 114 048
- JP-A- 2006 103 526
- JP-A- 2007 118 762
- JP-A- 2007 148 618
- JP-A- 2008 018 798
- JP-A- 2009 239 674
- KR-B1- 100 862 041
- US-A- 5 874 989
- US-A1- 2005 030 379
- US-A1- 2006 187 304

## Description

### Technical Field

The present invention relates to an image control apparatus, more particularly, to a technique of displaying an image captured by a camera mounted on a vehicle body of e.g. a passenger car on a monitor disposed adjacent a driver's seat.

### Background Art

As an example of the image control apparatus constructed above, Patent Document 1 discloses an arrangement wherein each one of left and right doors of the vehicle mounts a camera which captures an image of the rear side and a display is provided in the vehicle interior for displaying the photographic data of the camera when the door is opened.

According to this Patent Document 1, if the right door is opened, the photographic data of the vehicle rear side captured by the camera mounted on this door is displayed on the right side on the display; whereas if the left door is opened, the photographic data of the vehicle rear side captured by the camera mounted on this door is displayed on the left side on the display. This allows the passenger to recognize, via the display, approaching of an obstacle, thereby to assist a door opening/closing action.

Also, Patent Document 2 discloses a control configuration wherein based on captured images of a plurality of cameras mounted on a vehicle, a bird's eye view image of the surrounding of the vehicle are displayed as being divided in a plurality of photographic areas on a display unit and when a user has selected one of the photographic areas by touching it on the display unit, the selected photographic area is displayed with an enlargement thereof at a position adjacent the bird's eye view image on the display unit.

According to this Patent Document 2, even when a pit, an obstacle or the like is present at a location for parking and direct visual recognition of the pit, the obstacle or the like is difficult from the interior of the vehicle, as a camera viewpoint enlarged image or a partially enlarged bird's eye view image is displayed on the display unit, the pit, the obstacle or the like can be readily confirmed on the display unit.

### Citation List

### Patent Literature

Patent Document 1: Japanese Unexamined Patent Application Publication No. 2006-103526

Patent Document 2: Japanese Unexamined Patent Application Publication No. 2009-239674

Further, document US 2005/030379 A1 discloses a smart vehicle video management, in which a video source view is selected from at least one of a plurality of vehicle-mounted video sources based on detection of a vehicle event.

Document US 2005/030379 A1 discloses in detail an image control apparatus for a vehicle having left and right rear doors, said image control apparatus comprising: a left side camera which, when attached to said vehicle, captures an image including a left rear door of said vehicle body in an image capturing area thereof; a right side camera which, when attached to said vehicle, captures an image including a right rear door of said vehicle body in an image capturing area thereof; a monitor capable of displaying the image captured by the left side camera and the right side camera, the monitor being disposable adjacent a driver's seat; a left door opening detection sensor which, when fitted on said vehicle, detects an open state of the left rear slide door; and a right door opening detection sensor which, when fitted on said vehicle, detects an open state of the right rear slide door; the image control apparatus further comprising an electronic control unit which further comprises a display image generating means which generates a left display image from the captured image of the left side camera and a right display image from the captured image of the right side camera; and an information outputting means which causes said monitor to display, in a predetermined layout, when the left door opening detection sensor detects an open state of the left rear door or the right door opening detection sensor detects an open state of the right rear door, at least the image of the respective rear door in an open state.

### Summary of Invention

### Technical Problem

When a passenger car is stopped and a door is opened for allowing a passenger to get on/off the vehicle, the driver seated at the driver's seat may sometimes desire to check the situation of the passenger's getting on/off or an obstacle or the like which may be present around the vehicle. In particular, when a child is to get on/off the vehicle with the vehicle being stopped at the shoulder of a road, other vehicles can run on the side of the road, so reliable checking of the getting on/off may be desirable from the safety point of view also.

To cope with the above-described current situation, according to the technique disclosed in Patent Document 1, the technique is configured to allow visual checking, via the display unit disposed adjacent the driver's seat, the condition of an automobile, a motor cycle or the like approaching from the rear side of the vehicle when the door is opened. However, as the technique does not take into account checking of a passenger's getting on/off, the technique suffers the difficulty of checking of a passenger's getting on/off.

Further, in the case of the technique disclosed in cited Document 2, the technique allows displaying of the door vicinity with enlargement thereof. However, when a passenger's getting on/off is to be checked, it is necessary for the driver to identify the door used for the passenger's getting on/off and to specify the area where that door is to be photographed, thus the technique being troublesome.

The object of the present invention is to reasonably configure an image control apparatus that allows a driver to easily check the situation of a passenger's getting on/off a vehicle.

### Solution to Problem

In order to achieve the above object, there is provided an image control apparatus according to claim 1. Further features and advantageous implementations are shown in the dependent claims.

With the arrangement according to the present invention, when the door opening detection sensor has detected an open state of the door, the monitor displays the image captured by the camera. That is, upon establishment of open state of the door, the driver can check the image of the vicinity of the door which is under the open state, with the driver remaining at the position of the driver's seat and without the driver's needing to carry out any special operation.

As a result, there has been realized an image control apparatus that allows a driver to easily check the situation of a passenger's getting on/off a vehicle.

According to the above arrangement, when at least one of the left door opening detection sensor and the right door opening detection sensor has detected an open state, the information outputting means causes the monitor to display one of the left display image and the right display image corresponding to this detection in a predetermined layout. As the image is displayed in such predetermined layout, the identification of the door under the open state can be easily made, based on the display position of the image.

In the present invention, said display image generating means may be configured to display said left display image through an operation of effecting mirror reversal of right/left on at least a portion of said left side camera captured image and to display said right display image through an operation of effecting mirror reversal of right/left on at least a portion of said right side camera captured image.

With the above-described arrangement, the monitor will display the left display image which has been generated through an operation of effecting mirror reversal of right/left on at least a portion of the left side camera captured image and the right display image which has been generated through an operation of effecting mirror reversal of right/left on at least a portion of the right side camera captured image. Hence, it is possible to grasp the situation of the door vicinity via the monitor with a feel similar to the feel of visually checking from the driver's seat via the rearview mirror.

According to the present invention,
there is provided a bird's eye view image generating means which generates a bird's eye view image viewing the vehicle surrounding from the above, based on the image captured by the left side camera and the image captured by the right side camera; and
said information outputting means causes said monitor to display at least one of the left display image and the right display mage as well as said bird's eye view image in a predetermined layout.

With the above-described arrangement, the bird's eye view image generating means generates a bird's eye view image viewing the vehicle surrounding form the above, based on the photographic image captured by the left side camera and the photographic image captured by the right side camera. Further, when at least one of the left door opening detection sensor and the right door opening detection sensor has detected an open state, the information outputting means causes the monitor to display at least one of the left display image and the right display image in a predetermined layout and to display also a bird's eye view image, so that it becomes possible to grasp not only the situation of the door vicinity, but also the situation of the vehicle vicinity in general.

Preferably, in the present invention, for said monitor, said information outputting means sets a bird's eye view image window which displays said bird's eye view image and sets also a left window which displays said left display image and a right window which displays said right display image in left/right juxtaposed positional relationship with each other.

With the above-described arrangement, when e.g. both the left and right doors are opened, the information outputting means causes the left photographic image to be displayed at the left window and causes the right photographic image to be displayed at the right window. With this, from the left widow and the right window juxtaposed, the driver can grasp the situation of the door vicinity without unnatural feel about the positional relationship.

According to the present invention, as said camera, there is provided a left side camera which captures an image of the left side area including the left side road surface of the vehicle body,
as said door opening sensor, there is provided a left door opening detection sensor which detects an open state of the left door of the vehicle body; and
preferably there is provided a display image generating means which generates an image of the left door vicinity as a left display image from the captured image of the left side camera through an operation of effecting mirror reversal of right/left on at least a portion of said left side camera captured image.

With the above-described arrangement, when the left door opening detection sensor detects an open state of the left door of the vehicle body, the information outputting means causes the monitor to display the left display image. With this displaying of the image, based on the displaying position of the image, the image of the vicinity of the left door under the open state can be checked

According to the present invention, preferably, as said camera, there is provided a right side camera which captures an image of the right side area including the right side road surface of the vehicle body,
as said door opening sensor, there is provided a right door opening detection sensor which detects an open state of the right door of the vehicle body; and
there is provided a display image generating means which generates an image of the right door vicinity as a right display image from the captured image of the right side camera through an operation of effecting mirror reversal of right/left on at least a portion of said right side camera captured image.

With the above-described arrangement, when the right door opening detection sensor detects an open state of the right door of the vehicle body, the information outputting means causes the monitor to display the right display image. With this displaying of the image, based on the displaying position of the image, the image of the vicinity of the right door under the open state can be checked.

According to the present invention, preferably, there is provided a control mode setting section which executes, as getting on/off checking mode, a control operation wherein when it is detected that the vehicle is stopped and the door opening detection sensor has detected an open state of a door, the captured image of the camera is displayed on the monitor with priority over the displaying of information of a currently executed control mode.

With the above arrangement, even when a certain control mode is being executed and information according to this control mode is being displayed on the monitor, if the vehicle is stopped and a door is opened, the control mode setting section executes the getting on/off checking mode with priority, so that the situation of the door being opened can be checked on the monitor.

### Brief Description of Drawings

[Fig. 1] is a plane view schematically showing a construction of a passenger car.
[Fig. 2] is a partially cutaway perspective view of the passenger car.
[Fig. 3] is a circuit block diagram of a control system.
[Fig. 4] is a diagram showing the layout of a getting on/off checking screen.
[Fig. 5] is a diagram showing the getting on/off checking screen when the right rear door is opened.
[Fig. 6] is a diagram showing the getting on/off checking screen when the left rear door and the right rear door are opened.
[Fig. 7] is a flowchart of a monitor display control.

### Description of Embodiments

Next, an embodiment of the present invention will be described with reference to the accompanying drawings.

According to the present embodiment, there is provided an image control apparatus configured for generating a bird's eye view image showing the vicinity of a vehicle body 1 as seen from above, from captured images of a plurality of cameras mounted on the vehicle body 1 and causing a monitor 21 to display this bird's eye view image. In particular, this image control apparatus is configured to execute a control mode wherein when any door is opened, a captured image of a camera of the plurality of cameras that includes this door in its image capturing area is displayed on the monitor 21 for allowing a passenger's getting on/off the vehicle. Next, this control mode and its control configuration will be explained.

### [Basic Configuration]

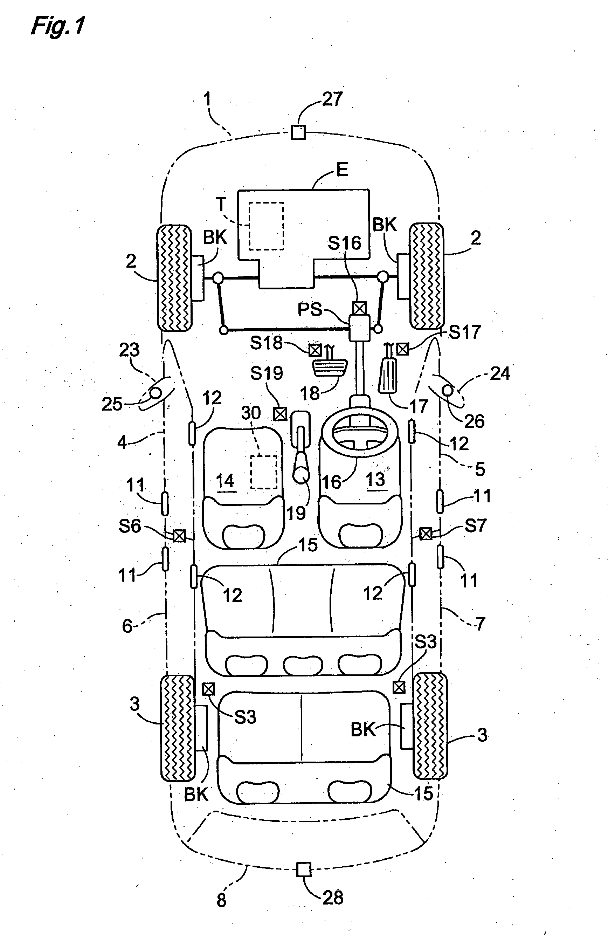

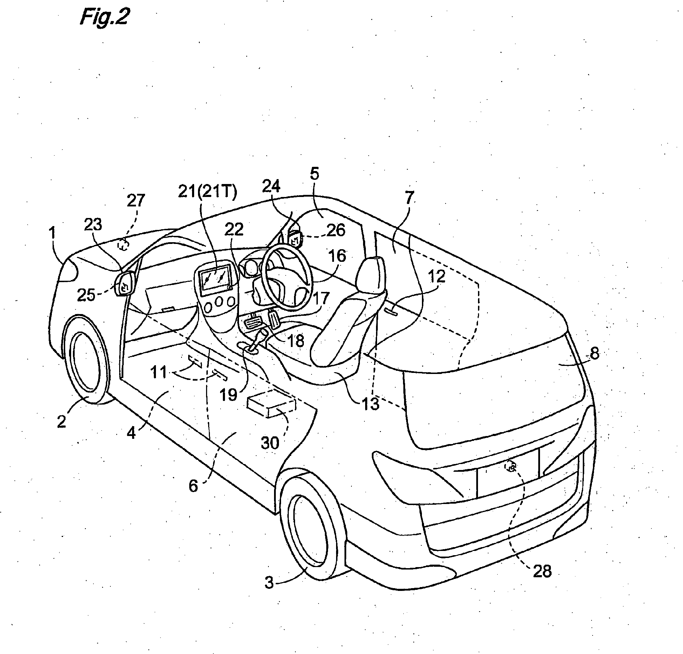

As shown in Fig. 1 and Fig. 2, the passenger car vehicle body 1 includes left and right front wheels 2 and left and right rear wheels 3. At its front portions, the vehicle body 1 includes a left front door 4 and a right front door 5 that can be opened and closed via hinge. At its rear portions, the vehicle body 1 includes a left rear door 6 and a right rear door 7 that can be opened and closed by sliding. The vehicle body 1 further includes, at its rear end, a hatchback type back door 8.

The left front door 4 and the right front door 5 as well as the left rear door 6 and the right rear door 7 are used for a passenger's getting on/off the vehicle. Each one of these doors includes an outside handle 11 on its outer side and an inside handle 12 on the vehicle interior side. With an operation of this outside handle 11 or the inside handle 12, a latch for keeping the door under closed state is released for allowing opening of the door. Incidentally, the backdoor 8 at the rear end of the vehicle body 1 is not used for passenger's getting on/off.

In the interior of the vehicle body 1, there are provided a driver's seat 13, a front passenger's seat 14 and a plurality of rear passenger's seats 15. At a position forwardly of the driver's seat 13, there is provided a steering wheel 16, forwardly of which an instrument panel mounting various meters is disposed. At the foot of the driver's seat 13, there are arranged an accelerator pedal 17 and a brake pedal 18 for operating a brake device BK for the front wheels 2 and the rear wheels 3. And, laterally of the driver's seat 13, there is arranged a shift lever 19 for effecting speed changing operations.

Needless to say, the right front door 5 is opened when a driver gets on/off the driver's seat 13 and the left front door 4 is opened when a passenger gets on/off the front passenger's seat 14. The left rear door 6 and the right rear door 7 are opened respectively when a passenger is to get on/off the rear seat 15.

In the vicinity of the drive's seat 13 and at an upper position of the console, there is mounted a monitor 21 forming a touch panel 21T on its displaying face. This monitor 21 is of a liquid crystal type having backlight. Needless to say, the monitor 21 can be also a plasma display type or the CRT type. The touch panel 21 will be configured as the pressure-sensitive or electrostatic instruction inputting device configured to output a position touched by a finger or the like as location data. The monitor 21 includes a speaker 22 also. However, this speaker 22 can be mounted at any other position such as the inner side of a door, etc.

The left front door 4 mounts a left side view mirror 23 and the right front door 5 mounts a right side view mirror 24. In the instant embodiment, as image capturing devices for capturing images of the surrounding of the vehicle body, the left side view mirror 23 mounts a left side camera 25 and the right side view mirror 24 mounts a right side camera 26. And, at the front end of the vehicle body 1, a front camera 27 is mounted and at the rear end of the vehicle body 1, a rear camera 28 is mounted.

In particular, the left side camera 25 has its image capturing direction set downwards so as to capture an image of the left side area including the road surface present on the left side of the vehicle body1. And, the captured image of this left side camera 25 includes the left rear door 6. Similarly, the right side camera 26 has its image capturing direction set downwards so as to capture an image of the right side area including the road surface present on the right side of the vehicle body1. And, the captured image of this right side camera 26 includes the right rear door 7.

These cameras as image capturing devices comprise digital cameras incorporating image pickup devices such as CCD (charge coupled devices) and CIS (CMOS image sensors). Each camera outputs captured information as video information in realtime. Each one of these cameras has a wide angle lens for securing a wide view angle and has its image capturing direction set so as to cause its captured image to include a portion of the vehicle body 1 as well as the road surface in the vicinity of the vehicle body 1.

The monitor 21 is configured to display navigation information in a navigation mode control and configured to display also parking assistance information in a parking assist mode control. Further, the monitor 21 is configured to display an image for checking a passenger's getting on/off via the left rear door 6 and the right rear door 7 in a passenger's getting on/off checking mode control. Incidentally, in the present invention, there may be provided a separate monitor dedicated to displaying the image in the passenger's getting on/off checking mode control.

At a front portion of the vehicle body, there is mounted a power steering unit PS for transmitting a rotational operation force of the steering wheel 16 to the front wheels 2 for effecting a powered steering (maneuvering). Also, at the front portion of the vehicle body, there are mounted an engine E and a speed changing mechanism T comprising a torque converter, a CVT, etc. for speed-changing the power from this engine E and transmitting the resultant power to the front wheels 2.

The vehicle body 1 mounts various sensors for detecting a driving operation and moving conditions of the vehicle 1. These sensors will be described more specifically next. The operational system of the steering wheel 16 includes a steering sensor S16 for determining a steering operation direction (steering direction) and operation amount (steering amount). The operational system for the shift lever 19 includes a shift position sensor S19 for determining a shift position. Also, the operational system for the accelerator pedal 17 includes an accelerator sensor S17 for determining an operation amount of the accelerator pedal 17. The operational system for the brake pedal 18 includes a brake sensor S18 for detecting presence/absence of an operation.

Adjacent each rear wheel 3, there is provided a photo-interrupter or pickup type traveling distance sensor S3 for determining a traveling distance of the vehicle 1 based on a rotational amount of the rear wheel 3. Incidentally, as the traveling distance sensor S3, it is possible to employ a sensor configured to obtain the traveling distance based on the rotational amount of the transmission system incorporated within the speed changing mechanism T. Further, as the traveling distance sensor S3, it is also possible to employ one configured to determine the rotational amount of the front wheel 2. Further, it is also possible to configure such that the traveling amount and the steering amount of the vehicle body 1 are detected based on a captured image of the front camera 27 or the rear camera 28.

There are also provided a left door opening detection sensor S6 for detecting an open state of the left rear door 6 and a right door opening detection sensor S7 for detecting an open state of the right rear door 7. These left door opening detection sensor S6 and the right door opening detection sensor S7 each is comprised of a limit switch or the like for detecting realization of the open state by outputting a detection signal at the timing of an opening operation of the door is started. Meanwhile, as the left door opening detection sensor S6 and the right door opening detection sensor S7, in the case of an automatic slide door which is opened when the outside handle 11 or the inside handle 12 of these doors is operated or when the driver operates a switch, there may be used sensors for detecting such switch operation.

### [Control Configuration]

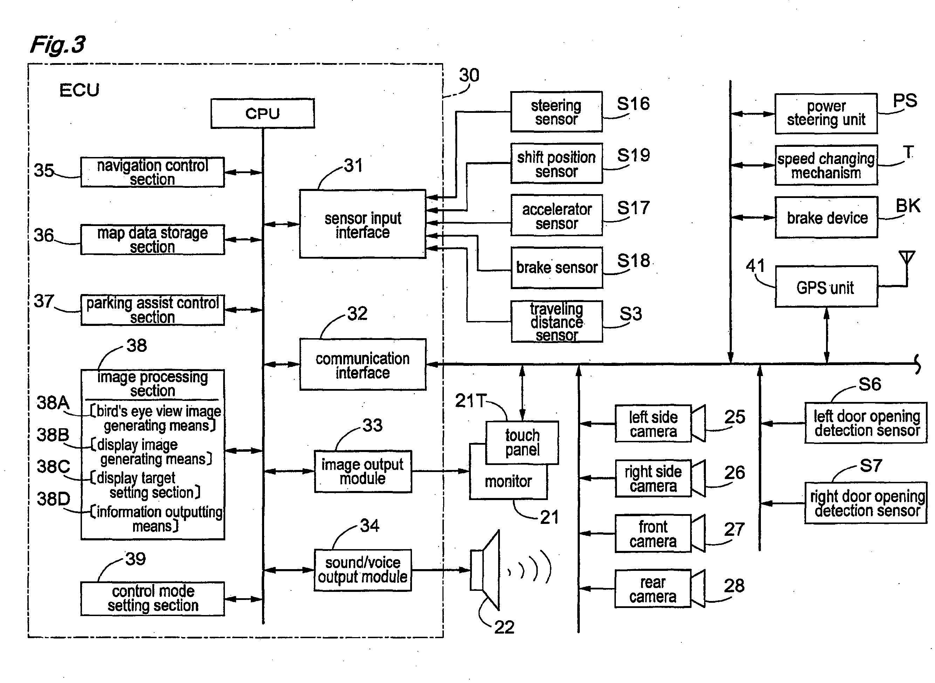

At the center of the vehicle body, there is mounted an ECU 30 as an image control apparatus constituting the "core" of the parking assistance apparatus of the present invention. This ECU 30, as shown in Fig. 3, includes an interface consisting of a sensor input interface 31 and a communication interface 32, and includes also an image output module 33 and a sound/voice output module 34.

This ECU 30 includes a processing system including a microprocessor, a DSP (digital signal processor), etc. for processing information obtained through the interface and the result of processing is outputted from the image output module 33 to the monitor 21 and outputted also from the sound/voice output module 34 to the speaker 22.

This ECU 30 includes a navigation control section 35 for realizing control in the navigation mode, a map data storage section 36 for providing map information to the navigation control section 35, a parking assist control section 37 for realizing control in the parking assist mode and an image processing section 38 for realizing control in the passenger's getting on/off checking mode.

The navigation control section 35 obtains a self vehicle position represented by longitude information and latitude information from a GPS unit 41 during traveling and then obtains map data corresponding to this self vehicle position and causes the monitor 21 to display the data. The navigation control section 35 also causes the monitor 21 to display navigation information for guiding to a desired destination and causes the speaker 22 to output the navigation information in the form of a sound/voice message. The map data storage section 36 executes an operation of providing the map data corresponding to the self vehicle position to the navigation control section 35.

The parking assist control section 37 causes the monitor 21 to display a captured image in at least one of a camera view mode and an around view mode and to display also in a superposed manner the guide information for guiding the vehicle body 1 to a desired parking position, relative to this captured image. Further, as the assist information, assist information of a steering direction or the like is outputted in the form of a sound/voice from the speaker 22. As a steering operation or the like is effected based on such information as above, the vehicle body 1 can be readily guided or introduced to the parking position.

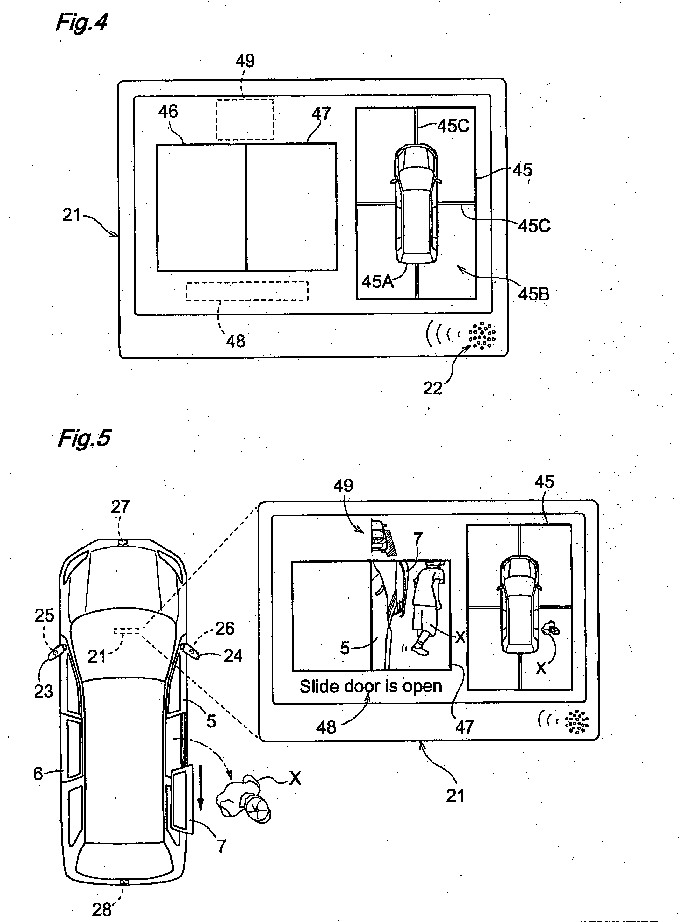

The image processing section 38 includes a bird's eye view image generating means 38A, a display image generating means 38B, a display target setting means 38C, and an information outputting means 38D. The bird's eye view image generating means 38A generates a bird's eye view image to be displayed at a bird's eye view image window 45 in a passenger's getting on/off checking screen shown in Fig. 4. The display image generating means 38B generates a display image to be displayed at a left window 46 or a right window 47 in a passenger's getting on/off checking screen shown in Fig. 4. The display target setting means 38C sets the display image to be displayed at the left window 46 or the right window 47 in the getting on/off checking screen shown in Fig. 4. The information outputting means 38D causes the monitor 21 to display the getting on/off checking screen and arranges the bird's eye view image window 45, the left window 46, the right window 47, etc. in a predetermined layout relative to this getting on/off checking screen and displays the images at these respective windows.

Incidentally, the navigation control section 35, the parking assist control section 37 and the image processing section 38 are comprised of software, but these can alternatively be comprised of hardware or combination of hardware and software, if desired.

The ECU 30 is comprised of an electronic circuit and various interfaces and/or some or all of the output system can be incorporated in this electronic circuit. Meanwhile, the ECU 30 includes an electronic circuit constituting a processing system or a storage section comprised of memories, registers, etc. as discrete components. The ECU 30 effects input/output of information via data buses, address buses, control buses, or the like.

The sensor input interface 31 inputs information from the steering sensor S16, the shift position sensor S19, the accelerator sensor S17, the brake sensor S18 and the traveling distance sensor S3.

The communication interface 32 effects communications via a communication network with the power steering unit PS, the speed changing mechanism T, the brake device BK and a GPS unit 41. Further, this communication interface 32 obtains information from the touch panel 21T, the left side camera 25, the right side camera 26, the front camera 27, the rear camera 28, the left door opening detection sensor S6 and the right door opening detection sensor S7.

The image output module 33 outputs images to the monitor 21 and the sound/voice output module 34 outputs sounds or voices to the speaker 22.

### [Control Modes]

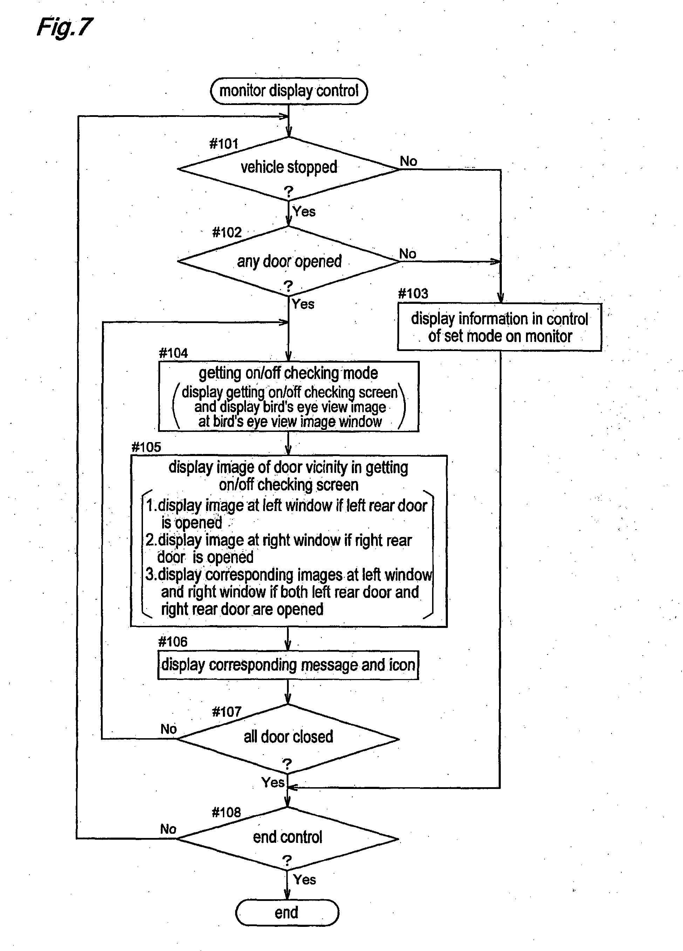

This ECU 30 realizes a control in the navigation mode, a control in the parking assist mode and a control in the passenger's getting on/off checking mode. In particular, in the control in the passenger's getting on/off checking mode, if at least one of the left rear door 6 and the right rear door 7 is under the open state, an image of the vicinity of the door under the open state is shown with an enlargement thereof on the monitor 21. Next, this control mode will be explained with reference to the flowchart of Fig. 7.

With the ECU 30 in operation, if it is determined, based on a signal from the traveling distance sensor S3 or the shift position sensor S19, that the vehicle 1 is under a stopped state, the ECU 30 obtains signals from the left rear door opening detection sensor S6 and the right door opening detection sensor S7. If it is determined that neither the left rear door 6 nor the right rear door 7 is under an open state, the ECU 30 causes the monitor 21 to display the information under the mode already set (either the navigation mode or the parking assist mode) (steps #101 through #103).

Incidentally, the determination at step #101 of "vehicle stopped state" can be a condition of the vehicle speed being 0 km/h in case a vehicle speed sensor is provided or can be a condition of an extremely low speed (1 to 2 km/h), taking into an account some possible delay in the detection by the vehicle speed sensor.

Conversely, if it is determined, based on the signals from the left door opening detection sensor S6 and the right door opening detection sensor S7, that at least one of the left rear door 6 and the right rear door 7 is now under an open state, the control mode is shifted to the passenger's getting on/off checking mode. In this getting on/off checking mode, as shown in Fig. 4, the getting on/off checking screen is displayed on the monitor 21 and the bird's eye view image window 45 in this getting on/off checking screen displays a bird's eye view image generated by the bird's eye view image generating means 38A (step #104).

In this getting on/off checking screen, the image displaying areas of the bird's eye view image window 45, the left window 46 and the right window 47 are set in juxtaposition and also a message displaying area 48 and an icon displaying area 49 are arranged in the layout illustrated in Fig. 4. This layout is set by the information outputting means 38D.

The bird's eye view image generating means 38A converts the captured images of the left side camera 25, the right side camera 26, the front camera 27 and the rear camera 28 into an image viewing the adjacent surrounding of the vehicle body from the above and generates a bird's eye view image through a synthesizing operation of mapping the converted image on a virtual road surface at the center position of the vehicle body in the plane view and then the information outputting means 38D outputs this bird's eye view image to the monitor 21.

When this bird's eye view image is displayed at the bird's eye view image window 45, a vehicle body image 45A will be disposed at its center position and a converted image 45B will be mapped around the vehicle body image 45A. And, within this bird's eye view image, there is formed, in the from of a cross, a baseline 45C as the basis for the front/rear position and left/right position relative to the center of the vehicle body 1. In particular, as the bird's eye view image generating means 38A and the information outputting means 38D process the captured images of the plurality of cameras in realtime, it is possible to check a passenger's getting on/off the vehicle body 1 as a video image in the bird's eye view image.

The left window 46 displays a portion of the captured image of the left side camera 25 with an enlargement thereof. The right window 47 displays a portion of the captured image of the right side camera 26 with an enlargement thereof. The message displaying area 48 displays a predetermined message comprised of character data. The icon displaying area 49 displays an icon corresponding to the rear view of the vehicle body 1. The modes of these displays will be described later herein.

In this control mode, when the vehicle body 1 is stopped and at least one of the left rear door 6 and the right rear door 7 reaches its open state, the mode is shifted forcibly to the getting on/off checking mode. Alternatively, however, a selection screen (not shown) may be displayed on the monitor 21, so that the mode may be shifted to the passenger's getting on/off checking mode as the driver puts his/her finger or the like on the button of the getting on/off checking mode in this selection screen.

Especially, according to one alternative mode of control conceivable, even under a vehicle stopped state, if the shift position sensor S19 detects that the shift lever 19 is set to the reverse position. the monitor 21 may be caused to display the captured image of the rear camera 28 (reverse monitor display) with priority over any other control mode. In the present invention, the control mode may be configured such that the mode can be shifted to the passenger's getting on/off checking mode in response to a desired operation such as a finger touch on the touch panel 21T, even when the captured image of the rear camera 28 is displayed on the monitor 21.

Next, if it is determined that at least one of the left rear door 6 and the right rear door 7 is under the open state, an image captured from the vicinity of the door under the open state will be displayed at the left window 46 or the right window 47 or at both the left window 46 and the right window 47. In association with this displaying, a message in the form of character data is displayed in the message displaying area 48 and an icon corresponding to the rear view of the vehicle body 1 is displayed in the ion displaying area 49 (steps #105 and #106).

In this way, when an image is to be displayed at the left window 46 or the right window 47, the display image generating means 38B processes the captured image of the left side camera 25 or the captured image of the right side camera 26 in realtime. Therefore, the situation of a passenger's getting on/off the vehicle body 1 can be checked in the form of a video image.

As an example (1), in case the left door opening detection sensor S6 detects the left rear door 6 being under the open state, the display target setting means 38C sets the left rear door 6 as the display target. Next, the display image generating means 38B separates or "clips" the image of the vicinity of the left rear door 6 from the captured image of the left side camera 25 for its enlargement and generates a right display image through right/left mirror reversal. The left display image thus generated will be displayed at the left window 46 by the information outputting means 38D.

Further, the information outputting means 38D displays a message "Slide door is open" in the message displaying area 48 and displays the left half of the icon in the icon displaying area 49. In the icon thus displayed, the image capturing area will be shown with hatching. In case there has occurred a passenger X' s getting on/off, the passenger X will be shown at the bird's eye view image window 45 and the left window 46.

As an example (2), as shown in Fig. 5, in case the right door opening detection sensor S7 detects the right rear door 7 being under the open state, the display target setting means 38C sets the right rear door 7 as the display target. Next, the display image generating means 38B separates or "clips" the image of the vicinity of the right rear door 7 from the captured image of the right side camera 26 for its enlargement and generates a left display image through right/left mirror reversal. The right display image thus generated will be displayed at the right window 47 by the information outputting means 38D.

Further, the information outputting means 38D displays a message "Slide door is open" in the message displaying area 48 and displays the right half of the icon in the icon displaying area 49.

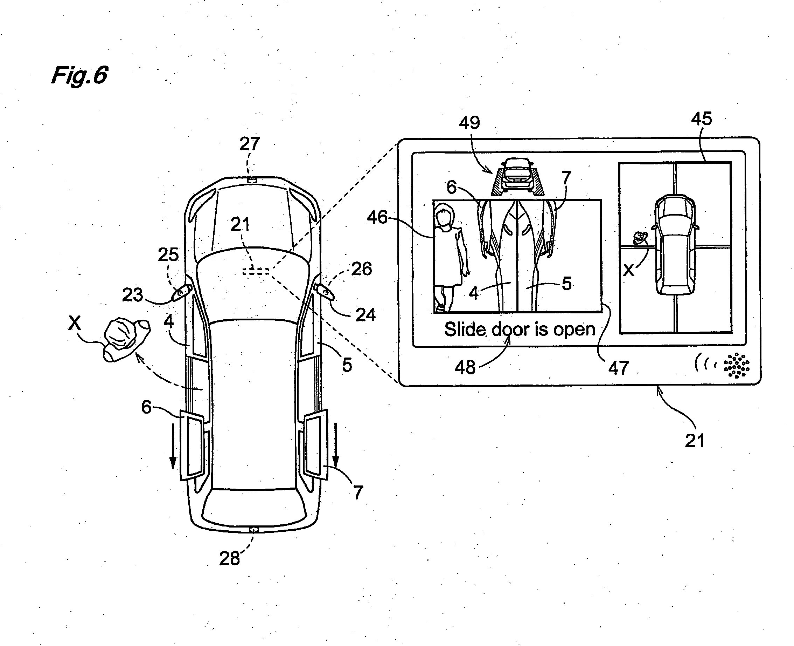

As an example (3), as shown in Fig. 6, in case both the left rear door 6 and the right rear door 7 are under the open state at a time, an operation similar to the above will be effected, so that the left display image will be displayed at the left window 46 and the right display image will be displayed at the right window 47. And, the message displaying area 48 will display a message "Slide doors are open" and the icon displaying area 49 will display the whole icon.

Thereafter, in case the left rear door 6 and the right rear door 7 are closed respectively, the control in the passenger's getting on/off checking mode will be ended. And, except for the case of all controls to be ended, the control will be shifted to the step at #101 and returned to the previously set mode (navigation mode or parking assist mode) and information in this control mode will be displayed on the monitor 21 (step #108).

As described above, according to the present invention, in case the left rear door 6 and/or the right rear door 7 is/are under the open state, the mode will be shifted to the passenger getting on/off checking mode with priority over any other previously effected mode, and the monitor 21 is caused to display the passenger's getting on/off checking screen. And, as the vicinity of the door(s) under the open state is displayed with its enlargement, the driver can check and grasp the situation of the passenger's getting on/off on the monitor 21, without needing to carry out any special operation for its displaying and without needing to view the rear side.

Further, as an enlarged image of the vicinity of the left rear door 6 is displayed at the left window 46 and an enlarged image of the vicinity of the right rear door 7 is displayed at the right window 47 and these left and right windows 46, 47 are arranged with the right/left juxtaposing positional relationship with each other, it is easy to distinguish between the right side and the left side. Moreover, as the images displayed at the left window 46 and the right window 47 are left/right mirror reversed images, the checking operation can be done with a feeling similar to checking with a rear view mirror, without any unnaturalness in the feeling.

Especially, since the images of the camera which are provided originally in the side mirrors for the purpose of generation of a bird's eye view image, there is no need for separately providing any cameras solely for imaging the door vicinities. Hence, there will not be invited any cost increase due to provision of such cameras.

### [Other Embodiments]

Within the scope of the attached claims, the present invention may be embodied in any other way than the above as follows.

(a) In case the outside handle 11 or the inside handle 12 is operated, an image of the vicinity of the operated door may be displayed on the monitor even before the door reaches its open state. In this case, it is possible to start the displaying at the timing of the operation of the outside handle 11 or the inside handle 12, whereby checking at an earlier timing is realized.

(b) There may be provided cameras dedicated to imaging the vicinities of the doors. In this case, the vicinity of a same door can be imaged from different angles by a plurality of cameras. And, if the displaying mode is set so as to display these captured images on the monitor, the checking/grasping of the situation in greater details will be made possible.

(c) The control mode can be set so as to cause the driver to recognize an open state in the form of a sound/voice when a door is under the open state. With this arrangement, even when the driver's line of vision is not toward the monitor 21, it is possible to cause the driver to direct his/her line of vision toward the monitor 21 so as to check getting on/off of a passenger through the passenger's getting on/off checking screen. Incidentally, the sound/voice may be an electronic sound or a human voice (spoken human words).

(d) In the instant embodiment, the image capturing direction of the side cameras was oriented downwards. However, the invention is not limited thereto. For instance, the image capturing direction may be oriented rearwards so as to capture an image of the door vicinity. In this case, the cameras may be disposed so as to eliminate the necessity of separating or clipping a portion of the captured image as was the case with the foregoing embodiment.

### Industrial Applicability

The present invention may be applied to automobiles in general having openable/closable doors.

### Reference Signs List

- 1: vehicle body
- 6: door (left rear door)
- 7: door (right rear door)
- 21: monitor
- 25: camera: left side camera
- 26: camera: right side camera
- 38A: bird's eye view image generating means
- 38B: display image generating means
- 38D: information outputting means
- 39: control mode setting section
- 45: bird's eye view image window
- 46: left window
- 47: right window
- S6: door opening detection sensor: left door opening detection sensor
- S7: door opening detection sensor: right door opening detection sensor

## Claims

1. An image control apparatus for a vehicle having left and right rear slide doors (**6, 7**), the image control apparatus comprising:
a left side camera (**25**) which, when attached to said vehicle, captures an image including a left rear slide door (**6**) of said vehicle body (**1**) in an image capturing area thereof;
a right side camera (**26**) which, when attached to said vehicle, captures an image including a right rear slide door (**7**) of said vehicle body (**1**) in an image capturing area thereof;
a monitor (**21**) capable of displaying the image captured by the left side camera (**25**) and the right side camera (**26**), the monitor (**21**) being disposable adjacent a driver's seat;
a left door opening detection sensor (**S6**) which, when fitted on said vehicle, detects an open state of the left rear slide door (**6**); and
a right door opening detection sensor (**S7**) which, when fitted on said vehicle, detects an open state of the right rear slide door (**7**);
the image control apparatus further comprising an electronic control unit (**30**) comprising an image processing section (**38**), said image processing section (**38**) comprising:
a bird's eye view image generating means (**38A**) which is configured to generate a bird's eye view image viewing the vehicle surrounding from the above, based on the image captured by the left side camera (**25**) and the image captured by the right side camera (**26**);
a display image generating means (**38B**) which generates a left display image from the captured image of the left side camera (**25**) and a right display image from the captured image of the right side camera (**26**); and
an information outputting means (**38D**) which is configured to cause said monitor (**21**) to display, in a predetermined layout, when the left door opening detection sensor (**S6**) detects an open state of the left rear door and/or the right door opening detection sensor (**S7**) detects an open state of the right rear door, at least the image of the respective rear door in an open state, as well as said bird's eye view image generated by the bird's eye view image generating means (**38A**).

2. An image control apparatus according to claim 1, wherein:
said display image generating means (**38B**) is configured to generate said left display image through an operation of mirroring for effecting mirror reversal of right/left on at least a portion of said left side camera captured image and to generate said right display image through an operation of mirroring for effecting mirror reversal of right/left on at least a portion of said right side camera captured image.

3. An image control apparatus according to claim 2, wherein:
for said monitor (**21**), said information outputting means (**38D**) sets a bird's eye view image window which displays said bird's eye view image and sets also a left window (**46**) which displays said left display image and a right window (**47**) which displays said right display image in left/right juxtaposed positional relationship with each other.

4. An image control apparatus according to any one of claims 1-3, wherein:
there is provided a control mode setting section (**39**) which executes, as getting on/off checking mode, a control operation wherein when it is detected that the vehicle is stopped and the door opening detection sensor (**S6, S7**) has detected an open state of a door, the captured image of the camera is displayed on the monitor (**21**) with priority over the displaying of information of a currently executed control mode.

## Patentansprüche

1. Abbildungssteuervorrichtung für ein Fahrzeug umfassend linke und rechte hintere Schiebetüren (**6, 7**), mit:
einer linken Seitenkamera (**25**), die, wenn diese an dem Fahrzeug angebracht ist, ein Abbild umfassend eine linke hintere Schiebetür (**6**) des Fahrzeugkörpers (**1**) in einem Abbildungseinfangbereich davon einfängt;
einer rechten Seitenkamera (**26**), die, wenn diese an dem Fahrzeug angebracht ist, ein Abbild umfassend eine rechte hintere Schiebetür (**7**) des Fahrzeugkörpers (**1**) in einem Abbildungseinfangbereich davon einfängt;
einem Monitor (**21**), der dazu fähig ist, das durch die linke Seitenkamera (**25**) und die rechte Seitenkamera (**26**) eingefangene Abbild anzuzeigen, wobei der Monitor (**21**) benachbart zu einem Fahrersitz anbringbar ist;
einem Öffnungserfassungssensor für die linke Tür (**S6**), der, wenn dieser an dem Fahrzeug montiert ist, einen Offen-Zustand der linken hinteren Schiebetür (**6**) erfasst; und
einem Öffnungserfassungssensor für die rechte Tür (**S7**), der, wenn dieser an dem Fahrzeug montiert ist, einen Offen-Zustand der rechten hinteren Schiebetür (**7**) erfasst;
wobei die Abbildungssteuervorrichtung weiterhin eine elektronische Steuereinheit (**30**) mit einer Abbildungsverarbeitungssektion (**38**) aufweist, wobei die Abbildungsverarbeitungssektion (**38**) aufweist:
eine Vogelperspektivenansichtabbildungserzeugungseinrichtung (**38A**), die konfiguriert ist, um ein Vogelperspektivenansichtsabbild zu erzeugen, mit dem die Fahrzeugumgebung von oben betrachtet wird, basierend auf dem durch die linke Seitenkamera (**25**) eingefangenen Abbild und dem durch die rechte Seitenkamera (**26**) eingefangenen Abbild;
eine Anzeigeabbildungserzeugungseinrichtung (**38B**), die ein linkes Anzeigeabbild aus dem eingefangenen Abbild der linken Seitenkamera (**25**) und ein rechtes Anzeigeabbild aus dem eingefangenen Abbild der rechten Seitenkamera (**26**) erzeugt; und
eine Informationenausgabeeinrichtung (**38D**), die konfiguriert ist, um den Monitor (**21**) zu bewirken, in einem vorbestimmten Layout, wenn der Öffnungserfassungssensor für die linke Tür (**S6**) einen Offen-Zustand der linken hinteren Tür erfasst und/oder der Öffnungserfassungssensor für die rechte Tür (**S7**) einen Offen-Zustand der rechten hinteren Tür erfasst, mindestens das Abbild der entsprechenden hinteren Tür in einem Offen-Zustand sowie das durch die Vogelperspektivenansichtabbilderzeugungseinrichtung (**38A**) erzeugte Vogelperspektivenansichtsabbild anzuzeigen.

2. Abbildungssteuervorrichtung gemäß Anspruch 1, wobei:
die Anzeigeabbilderzeugungseinrichtung (**38B**) konfiguriert ist, um das linke Anzeigeabbild durch eine Operation des Spiegelns zum Bewirken einer Spiegelungsumkehr von rechts/links an mindestens einem Abschnitt des durch die linke Seitenkamera eingefangenen Abbilds zu erzeugen, und das rechte Anzeigeabbild durch eine Operation des Spiegelns zum Bewirken einer Spiegelungsumkehr von rechts/links an mindestens einem Abschnitt des durch die rechte Seitenkamera eingefangenen Abbilds zu erzeugen.

3. Abbildungssteuervorrichtung gemäß Anspruch 2, wobei:
die Informationenausgabeeinrichtung (**38D**) ein Vogelperspektivenansichtabbildungsfenster, das das Vogelperspektivenansichtsabbild anzeigt, für den Monitor (**21**) einstellt, und ebenso ein linkes Fenster (**46**), das das linke Anzeigeabbild anzeigt, sowie ein rechtes Fenster (**47**), das das rechte Anzeigeabbild anzeigt, in einer links/rechts nebeneinandergestellten Positionsbeziehung miteinander einstellt.

4. Abbildungssteuervorrichtung gemäß einem der Ansprüche 1 bis 3, wobei:
eine Steuermoduseinstellsektion (**39**) bereitgestellt ist, die als Einstiegs-/Ausstiegsprüfmodus eine Steueroperation ausführt, wobei, wenn erfasst wird, dass das Fahrzeug gestoppt ist und der Türöffnungserfassungssensor (**S6**, **S7**) einen Offen-Zustand einer Tür erfasst hat, das eingefangene Abbild der Kamera auf dem Monitor (**21**) mit Priorität über das Anzeigen von Informationen eines gegenwärtigen ausgeführten Steuermodus angezeigt wird.

## Revendications

1. Appareil de commande d'image pour un véhicule comportant des portières coulissantes arrière gauche et droite (6, 7), l'appareil de commande d'image comprenant :
une caméra côté gauche (25) qui, lorsqu'elle est attachée au dit véhicule, capture une image comprenant une portière coulissante arrière gauche (6) de ladite carrosserie de véhicule (1) dans une zone de capture d'image de celle-ci ;
une caméra côté droit (26) qui, lorsqu'elle est attachée au dit véhicule, capture une image comprenant une portière coulissante arrière droite (7) de ladite carrosserie de véhicule (1) dans une zone de capture d'image de celle-ci ;
un moniteur (21) capable d'afficher l'image capturée par la caméra côté gauche (25) et la caméra côté droit (26), le moniteur (21) pouvant être disposé adjacent au siège d'un conducteur ;
un capteur de détection d'ouverture de portière gauche (S6) qui, lorsqu'il est installé sur ledit véhicule, détecte un état ouvert de la portière coulissante arrière gauche (6) ; et
un capteur de détection d'ouverture de portière droite (S7) qui, lorsqu'il est installé sur ledit véhicule, détecte un état ouvert de la portière coulissante arrière droite (7) ;
l'appareil de commande d'image comprenant en outre une unité de commande électronique (30) comprenant une section de traitement d'image (38), ladite section de traitement d'image (38) comprenant :
des moyens de génération d'image en plongée (38A) qui sont configurés pour générer une image en plongée montrant les alentours du véhicule à partir du dessus, sur la base de l'image capturée par la caméra côté gauche (25) et de l'image capturée par la caméra côté droit (26) ;
des moyens de génération d'image d'affichage (38B) qui génèrent une image d'affichage gauche à partir de l'image capturée de la caméra côté gauche (25) et une image d'affichage droite à partir de l'image capturée de la caméra côté droit (26) ; et
des moyens de sortie d'informations (38D) qui sont configurés pour amener ledit moniteur (21) à afficher, en un agencement prédéterminé, lorsque le capteur de détection d'ouverture de portière gauche (S6) détecte un état ouvert de la portière arrière gauche et/ou le capteur de détection d'ouverture de portière droite (S7) détecte un état ouvert de la portière arrière droite, au moins l'image de la portière arrière respective dans un état ouvert, ainsi que ladite image en plongée générée par les moyens de génération d'image en plongée (38A).

2. Appareil de commande d'image selon la revendication 1, dans lequel :
lesdits moyens de génération d'image d'affichage (38B) sont configurés pour générer ladite image d'affichage gauche par une opération de symétrie pour effectuer une inversion symétrique droite/gauche sur au moins une partie de ladite image capturée de caméra côté gauche et pour générer ladite image d'affichage droite par une opération de symétrie pour effectuer une inversion symétrique droite/gauche sur au moins une partie de ladite image capturée de caméra côté droit.

3. Appareil de commande d'image selon la revendication 2, dans lequel :
pour ledit moniteur (21), lesdits moyens de sortie d'informations (38D) établissent une fenêtre d'image en plongée qui affiche ladite image en plongée et établissent également une fenêtre gauche (46) qui affiche ladite image d'affichage gauche et une fenêtre droite (47) qui affiche ladite image d'affichage droite dans une relation de juxtaposition de positions gauche/droite l'une avec l'autre.

4. Appareil de commande d'image selon l'une quelconque des revendications 1 à 3, dans lequel :
il est prévu une section d'établissement de mode de commande (39) qui exécute, en tant que mode de vérification de montée/descente de passager, une opération de commande dans laquelle, lorsqu'il est détecté que le véhicule est arrêté et que le capteur de détection d'ouverture de portière (S6, S7) a détecté un état ouvert d'une portière, l'image capturée de la caméra est affichée sur le moniteur (21) avec une priorité sur l'affichage d'informations d'un mode de commande actuellement exécuté.
